Europäisches Patentamt

European Patent Office

Office européen des brevets

(19)

(11) Numéro de publication : **0 041 430**
**B1**

(12) FASCICULE DE BREVET EUROPÉEN

(45) Date de publication du fascicule du brevet :
29.02.84

(51) Int. Cl.³ : **B 23 K   1/00**

(21) Numéro de dépôt : 81400791.0

(22) Date de dépôt : 20.05.81

(54) **Procédé et dispositif de brasage en continu à partir de brasures en fil soumises à un chauffage complémentaire.**

(30) Priorité : 30.05.80 FR 8012027

(43) Date de publication de la demande :
09.12.81 Bulletin 81/49

(45) Mention de la délivrance du brevet :
29.02.84 Bulletin 84/09

(84) Etats contractants désignés :
BE CH DE GB IT LI SE

(56) Documents cités :
GB-A- 714 510
US-A- 3 857 013
IBM TECHNICAL DISCLOSURE BULLETIN, vol. 14,
no. 12, mai 1972, New York, US, T.A. BURNS et al.:
"Microbrazing termination technique for magnet
wire", page 3590

(73) Titulaire : REGIE NATIONALE DES USINES RENAULT
Boîte postale 103 8-10 avenue Emile Zola
F-92109 Boulogne-Billancourt (FR)

(72) Inventeur : Jousseaume, Bernard
55, rue René-Auduc
F-72000 Le Mans (FR)
Inventeur : Diquet, Gaston
54, Route des Aulnays
F-72700 Allomme (FR)

(74) Mandataire : Srour, Elie et al
8 & 10 Avenue Emile Zola
F-92109 Boulogne Billancourt (FR)

Procédé et dispositif de brasage en continu à partir de brasures en fil soumises à un chauffage complémentaire

La présente invention se rapporte à la technique du brasage dans laquelle les pièces à assembler sont préchauffées et le métal d'apport ou brasure est amené en continu au contact des pièces sous forme de fil dévidé automatiquement à partir de bobines entraînées, par exemple, par un motoréducteur à vitesse variable.

Comme on le sait, on entend par brasage l'assemblage de deux pièces métalliques au moyen d'un autre métal ou alliage d'apport dont le point de fusion est inférieur à celui des métaux à unir. L'alliage d'apport ou brasure est déposé par fusion, à haute température, tandis que les pièces à assembler sont portées à une température qui reste inférieure à leur température de fusion.

Pour réaliser un brasage, il est donc nécessaire de chauffer les pièces et provoquer la fusion de l'alliage en présence d'un flux protecteur, c'est-à-dire un produit mouillant et décapant, chauffage qui peut être obtenu par différentes techniques connues telles que le chalumeau, le four, les électrodes résistives, le bain de sel, le chauffage par induction.

Le brevet US-A 3.857.013 décrit un procédé de soudage bout à bout de pièces filiformes dans lequel on soumet le joint de brasage à un chauffage en faisant circuler un courant électrique de forte intensité dissipant par effet Joule une puissance calorifique localisée. Le mode de chauffage par induction est celui qui répond généralement le mieux aux exigences techniques du brasage car la grande puissance calorifique engendrée permet des temps d'exécution rapides en évitant les surchauffes des pièces et il est extrêmement facile à localiser au voisinage du joint de brasage. Par ailleurs, il faut signaler l'absence de contact entre la source chaude et les pièces à braser, ce qui permet l'automatisation des opérations et une bonne reproductibilité de la qualité des brasures à un prix de revient relativement bas. Toutefois, une forme appropriée à celle des pièces à assembler et une disposition correcte de l'inducteur sont nécessaires pour obtenir la meilleure efficacité.

La présentation du métal d'apport varie notamment en fonction de son utilisation, de la nature de l'alliage, de sa ductilité, de son prix. Pour ce qui concerne la présente demande de brevet, citons simplement le fil en bobines ou couronnes et les préformes telles que des anneaux ou des plaquettes découpés aux dimensions de la brasure à exécuter.

Lorsqu'il s'agit de braser des pièces de révolution, comme par exemple une douille dans un alésage, l'utilisation des anneaux semble indiquée mais présente cependant quelques inconvénients tels que l'obligation de stocker des préformes spécifiques de dimensions différentes, la mise en place préalable des anneaux autour des pièces à braser, la déformation éventuelle des anneaux au moment de leur présentation, ce qui réduit la qualité du contact thermique avec les pièces chauffées, le déplacement des anneaux dû au bouillonnement du flux aux températures élevées et un volume de brasure plus important que lorsque la brasure est amenée sous forme filaire.

L'homme de métier s'est donc tourné vers l'utilisation de fil en bobines pour pallier dans certains cas les inconvénients inhérents aux préformes. Cet état de la technique est illustré par les caractéristiques mentionnées dans le préambule de la revendication 1. S'agissant de fil dévidé automatiquement, le principal problème technique rencontré tient du fait que la brasure est amenée froide en contact avec les pièces à assembler. Comme pour les préformes, le contact thermique du fil avec les pièces préalablement chauffées provoque la fusion de la brasure qui doit s'étaler convenablement en présence du flux autour du joint de brasage.

Mais pour assurer une fusion correcte de cette brasure, la vitesse de dévidage doit être faible pour tenir compte du temps de chauffage de la brasure elle-même. Le cycle opératoire devient alors trop long et la qualité de l'assemblage incertaine car le flux protecteur brûle et les pièces s'oxydent.

Le but de la présente invention est de résoudre cette difficulté et de permettre l'utilisation de brasures à points de fusion élevés se présentant en bobines de fil dévidé en continu, sans augmentation du temps de brasage proprement dit, voire même avec une certaine réduction de ce temps.

Ce but est résolu par le procédé selon la revendication 1.

Dans la technique antérieure, le demandeur avait coutume d'utiliser par exemple une brasure à l'argent dont la température de fusion est de l'ordre de 700 °C, ce qui nécessitait que les pièces soient portées rapidement, par exemple par induction, à une température de l'ordre de 800 °C.

Avec le procédé selon l'invention, il devient possible non seulement d'utiliser une brasure présentée en fil à base d'argent, mais surtout d'utiliser un alliage cuivre-zinc ou laiton considérablement moins cher, dont le point de fusion est légèrement supérieur, de l'ordre de 900 °C, à condition de chauffer les pièces à une température de 1 000 °C, ce qui peut être obtenu sans difficulté et sans augmentation de la durée du cycle opératoire en augmentant la puissance de l'inducteur. S'agissant de grandes séries de production, l'économie est importante.

Le courant de chauffage du fil de brasure sera de préférence un courant alternatif compris entre 200 et 300 ampères sous une tension inférieure à 10 volts, mais il va de soi que les valeurs précises seront déterminées en fonction des besoins dépendant de la nature des pièces à assembler, de celle du métal d'apport et du moyen de chauffage choisi, bien que le procédé selon l'invention soit plus approprié lorsqu'il est combiné au chauffage des pièces par induction pour lequel il n'y a pas d'autre possibilité de chauffer la brasure qu'indirectement, par contact thermique avec les pièces.

Selon une autre caractéristique de l'invention, le fil de brasure ferme son propre circuit électrique de chauffage par contact avec les pièces à assembler au moment de leur présentation. Le courant électrique peut alors être détecté pour déclencher automatiquement le dévidage du fil d'une longueur prédéterminée tandis que le générateur de courant ne débite que pendant la durée du brasage.

L'invention comprend également le dispositif pour la mise en œuvre du procédé précédent, dispositif caractérisé en ce que le circuit électrique pour le chauffage complémentaire du fil est réalisé à partir d'un générateur de courant alternatif basse tension et de forte puissance, débitant à travers la buse conductrice de contact et guidage du fil, le fil de brasure lui-même et les pièces à braser mises à la masse avec le deuxième pôle du générateur pour fermer le circuit.

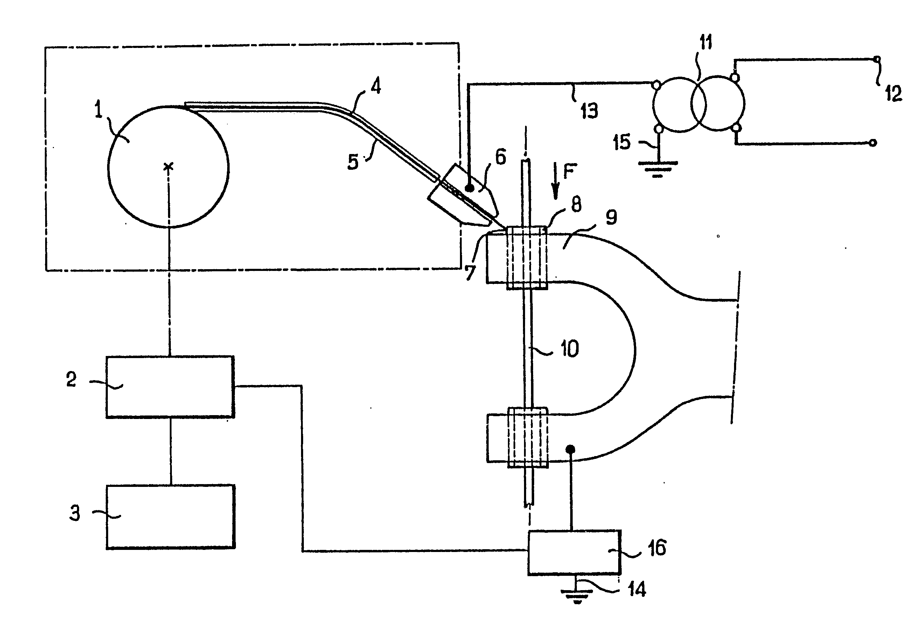

La description qui suit fait référence au dessin annexé qui illustre schématiquement et à titre d'exemple non limitatif le dispositif utilisé pour le brasage par induction d'une douille dans l'alésage d'un bras de suspension de véhicule automobile.

Le dispositif se compose d'un système de dévidage automatique d'une bobine 1 de fil de brasure, entraînée de façon connue par un motoréducteur 2 dont la vitesse peut être réglée par un variateur de vitesse 3.

Le dévidoir est isolé électriquement de la masse de l'installation au moyen de plaques isolantes et de vis de fixation isolées par des manchons non représentés.

Le fil 4 défile sous une gaine isolante 5 se prolongeant jusqu'à une buse 6 de guidage et de contact placée au voisinage des pièces à assembler et orientée de telle manière qu'à sa sortie de la buse, le fil entre en contact avec les pièces au joint de brasage 7.

Dans l'exemple considéré, il s'agit de braser une douille 8 dans l'alésage correspondant du bras 9 d'une fourche de suspension de véhicule, mise en place avec précision.

Les pièces sont chauffées par induction au moyen d'un inducteur tige 10 traversant l'axe des pièces et susceptible de se dégager par déplacement le long de cet axe afin d'amener ou de retirer en séquence les pièces à braser. Le reste du circuit inducteur classique n'est pas représenté.

Le circuit de chauffage complémentaire du fil selon l'invention se compose d'un générateur 11 de courant alternatif qui transforme l'alimentation du secteur 12 en un courant de forte intensité sous une faible tension. La sortie du transformateur 11 est reliée en 13 à la buse 6 électriquement conductrice puis, à travers le fil de brasure 4 lui-même, jusqu'aux pièces métalliques 8, 9 par contact direct au joint de brasage 7. Le circuit se referme par la masse 14 de l'installation reliée d'une part aux pièces à assembler et d'autre part au deuxième pôle de sortie 15 du transformateur.

L'alimentation du circuit de chauffage complémentaire peut être détectée par tous moyens appropriés, par exemple au moyen d'un détecteur de courant 16 interposé dans le circuit de chauffage et relié au circuit de commande du motoréducteur 2 de manière à déclencher automatiquement le dévidage du fil d'une longueur prédéterminée.

Exemple d'application : Pour braser les pièces précitées, en acier, on utilise un inducteur tige alimenté par un générateur haute fréquence de 300 à 500 kilohertz et de puissance comprise entre 50 et 100 kilowatt.

Pour un fil de brasure en laiton dont le point de fusion est de l'ordre de 900 °C, il est nécessaire de préchauffer les pièces à une température comprise entre 950 °C et 1 000 °C, résultat obtenu en 23 secondes environ avec l'inducteur ci-dessus. Le motoréducteur est alors commandé pour que la bobine dévide environ 4 à 5 centimètres de fil entrant en fusion et s'étalant convenablement tout autour du joint de brasage grâce aux calories apportées d'une part par contact thermique direct avec les pièces préchauffées et d'autre part par le courant du circuit de chauffage complémentaire débitant environ 250 ampères sous 3 volts à la fréquence du secteur (50 hertz). Cette opération dure environ 7 secondes si bien que la durée totale du brasage n'excède pas 30 secondes, temps acceptable pour éviter l'oxydation des métaux.

L'invention n'est pas limitée à l'exemple décrit mais englobe les équivalents techniques procurant un résultat satisfaisant. Il suffit d'adapter les puissances de l'inducteur et du circuit de chauffage complémentaire ainsi que la vitesse et la durée du défilement de la brasure à la forme et aux caractéristiques des matériaux à assembler.

**Revendications**

1. Procédé de brasage dans lequel les pièces (8, 9) à assembler sont préchauffées par induction, et disposées dans un circuit électrique, le métal d'apport étant amené en présence d'un flux au contact des pièces, sous la forme de bobines (1) de fil (4) dévidé en continu, procédé caractérisé en ce que l'on soumet le joint (7) de brasage à un chauffage complémentaire et indépendant du chauffage obtenu par contact thermique avec les pièces préchauffées, en faisant circuler un courant électrique de forte intensité dans le fil (4), inséré dans le circuit précité et qui est en contact avec les pièces (8, 9), courant dissipant par effet Joule une puissance calorifique localisée et dissipée dans la résistance électrique de forte valeur créée au contact (7) fil-pièces.

2. Procédé selon la revendication 1, caractérisé en ce que l'on utilise un fil de brasure à point de fusion élevé, compris entre 700 °C et 900 °C.

3. Procédé selon la revendication 2, caractérisé en ce que le fil est de préférence un alliage cuivre-zinc (laiton).

4. Procédé selon les revendications 1 à 3, caractérisé en ce que le courant de chauffage du fil est un courant alternatif de l'ordre de 200 à 300 ampères sous une tension inférieure à 10 volts.

5. Procédé selon la revendication 1, caractérisé en ce que le passage du courant électrique dans le circuit de chauffage du fil est détecté (16) pour déclencher automatiquement le dévidage du fil (4) d'une longueur prédéterminée.

6. Dispositif pour la mise en œuvre du procédé de brasage dans lequel les pièces (8, 9) à assembler sont préchauffées par induction, et disposées dans un circuit électrique, le métal d'apport étant amené en présence d'un flux au contact des pièces sous la forme de bobines (1) de fil (4) dévidé en continu, caractérisé en ce que le circuit électrique pour le chauffage complémentaire du fil est réalisé à partir d'un générateur (11) de courant alternatif basse tension et de forte puissance, débitant à travers la buse (6) conductrice de contact et de guidage du fil, le fil de brasure (4) lui-même et les pièces à braser (8, 9) mises à la masse (14) avec le deuxième pôle (15) du générateur.

7. Dispositif selon la revendication 6, caractérisé en ce que la bobine (1) de fil est entraînée par un motoréducteur (2) réglé par un variateur de vitesse (3) et en ce que l'entraînement de la bobine est commandé automatiquement par un détecteur de courant (16) placé dans le circuit de chauffage du fil.

8. Dispositif selon la revendication 6, caractérisé en ce que l'installation de dévidage du fil est isolée électriquement de la masse et en particulier le fil de brasure (4) qui est amené sous une gaine isolante (5) jusqu'à la buse (6) de contact conductrice.

**Claims**

1. A brazing process in which all the parts 8, 9 to be assembled are preheated by induction, and arranged in an electric circuit, the filler metal being brought in the presence of a flux on contact with the parts, the form of coils 1 of wire 4 reeled off continuously, process characterized in that the brazing joint 7 is subjected to heating that is complementary to and independent of the heating obtained through thermal contact with the preheated parts, by causing to circulate a strong intensity electric current in the wire 4, inserted into the above-mentioned circuit and which is in contact with parts 8, 9, this current dissipating through the Joule effect a calorific power localized and dissipated in the high value electric resistance created on the wire-part contact 7.

2. A process according to claim 1, characterized in that is used a brazing wire having a high melting point, comprised between 700 °C and 900 °C.

3. A process according to claim 2, characterized in that the wire is preferably a copper-zinc alloy (brass).

4. A process according to claims 1 to 3, characterized in that the heating current of the wire is an alternate current in the range of 200 to 300 amperes under a voltage inferior to 10 volts.

5. A process according to claim 1, characterized in that the passage of the electric current in the heating circuit of the wire is detected 16 in order to automatically actuate the reeling off of the wire 4 on a predetermined length.

6. A device for operating the brazing process in which the parts 8, 9 to be assembled are preheated by induction, and arranged in an electric circuit, the filler metal being brought in the presence of a flux on contact with the parts in the form of coils 1 of wire 4 reeled off continuously, characterized in that the electric circuit for the complementary heating of the wire is realized from a generator 11 of an alternate low voltage and high power current, outflowing through the conducting contact and guiding nozzle 6 of the wire, the brazing wire 4 itself and the parts to be brazed 8,9 being earthed 14 with the second pole 15 of the generator.

7. A device according to claim 6, characterized in that the coil 1 of wire is driven by a motoreducer 2 adjusted by a speed variator 3 and in that the driving of the coil is automatically controlled by a current detector 16 placed in the heating circuit of the wire.

8. A device according to claim 6, characterized in that the reeling off of the wire installation is electrically insulated from the mass and in particular the brazing wire 4 that is brought under an insulating sheath 5 to the conducting contact nozzle 6.

**Ansprüche**

1. Lötverfahren bei welchem die zu verbindenden Werkstücke (8, 9) mittels Induktion vorgeheizt und in eine elektrische Schaltung eingeordnet sind, wobei das Auftragsmetall in Anwesenheit eines mit den Werkstücken in Berührung stehenden Stromes in der Form von kontinuierlich abgespultem Draht (4) — Spulen (1) herangeführt wird, dadurch gekennzeichnet, dass man die Schweissstelle (7) einer von der durch thermischen Kontakt mit den vorgewärmten Werkstücken erzielten Erhitzung unabhängigen ergänzenden Erhitzung unterzieht, indem man durch den in die genannte Schaltung eingefügten und mit den Werkstücken (8, 9) in Berührung stehenden Draht (4) einen elektrischen Strom mit hoher Stromstärke fliessen lässt, der aufgrund des Joule-Effekts eine in dem Kontaktbereich (7) zwischen dem Draht und den Werkstücken lokalisierte und abgegebene Wärmeenergie ausstreut.

2. Verfahren nach Anspruch 1, dadurch gekennzeichnet, dass man einen Lötdraht mit hohem, zwischen 700 °C und 900 °C liegendem Schmelzpunkt benutzt.

3. Verfahren nach Anspruch 2, dadurch gekennzeichnet, dass der Draht vorzugsweise eine Kupfer-Zinklegierung (Messing) ist.

4. Verfahren nach den Ansprüchen 1 bis 3, dadurch gekennzeichnet, dass der Heizstrom des Drahtes ein Wechselstrom von etwa 200 bis 300 Ampere mit einer Spannung von weniger als 10 Volt ist.

5. Verfahren nach Anspruch 1, dadurch gekennzeichnet, dass der Fluss des elektrischen Stromes in der Schaltung zum Heizen des Drahtes zwecks Auslösung des selbsttätigen Abspulens einer vorherbestimmten Länge des Drahtes (4) abgefühlt (16) wird.

6. Vorrichtung zur Ausführung des Lötverfahrens, in welchem die zu verbindenden Werkstücke (8, 9) mittels Induktion vorgeheizt und in eine elektrische Schaltung eingeordnet sind, wobei das Auftragsmetall in Form von kontinuierlich abgespulten Drahtspulen (1) in Anwesenheit eines mit den Werkstücken in Berührung stehenden Flussmittels herangeführt wird, dadurch gekennzeichnet, dass die elektrische Schaltung für das zusätzliche Heizen des Drahtes von einem Wechselstromerzeuger (11) mit niedriger Spannung und hoher Stromstärke ausgeht, welcher den Strom über das leitende Drahtführungs- und Kontaktmundstück (6), über den Lötdraht (4) selbst und die mit dem zweiten Pol (15) des Erzeugers geerdeten (14), zu lötenden Werkstücke (8, 9) abgibt.

7. Vorrichtung nach Anspruch 6, dadurch gekennzeichnet, dass die Drahtspule (1) durch eine vermittels eines Geschwindigkeitsreglers (3) gesteuerte Untersetzungsvorrichtung angetrieben wird, und dass der Antrieb der Spule selbsttätig von einem in der Schaltung zum Heizen des Drahtes angeordneten Stromfühler (16) gesteuert wird.

8. Vorrichtung nach Anspruch 6, dadurch gekennzeichnet, dass die Drahtabspulvorrichtung von der Erdungsmasse isoliert ist und insbesondere der Lötdraht (4), welcher in einer Isolierhülle (5) bis zum leitenden Kontaktmundstück (6) geführt wird.